# EUROPEAN PATENT APPLICATION

(11) **EP 3 668 210 A1**
(43) Date of publication of application: **17.06.2020**
(21) Application number: 18845227.0
(22) Date of filing: 07.02.2018
(51) Int. Cl.: H04W 72/02

(54) **METHOD AND DEVICE FOR CONFIGURING WIRELESS RESOURCE POOL**

(30) Priority: 11.08.2017 CN 201710687672
(71) Applicant: ZTE Corporation, Shenzhen, Guangdong 518057 (CN)
(72) Inventor: XU, Hui, Shenzhen Guangdong 518057 (CN); JI, Zhongwei, Shenzhen Guangdong 518057 (CN); LU, Chen, Shenzhen Guangdong 518057 (CN); WANG, Yaying, Shenzhen Guangdong 518057 (CN); XIE, Fang, Shenzhen Guangdong 518057 (CN); YAN, Hua, Shenzhen Guangdong 518057 (CN); DING, Jianfeng, Shenzhen Guangdong 518057 (CN); HUA, Xiaoquan, Shenzhen Guangdong 518057 (CN)
(74) Representative: Aipex B.V.
(86) International application number: PCT/CN2018/075671
(87) International publication number: WO 2019/029144

(57) **Abstract**

Provided are a method and a device for configuring a radio resource pool. The method includes configuring a shared resource pool, where the shared resource pool includes a first resource pool and a second resource pool, the first resource pool is used by a base station to configure a PC5 radio resource for a user equipment (UE), the second resource pool is used by the UE to autonomously select a PC5 radio resource, the first resource pool completely or partially overlaps with the second resource pool, and an overlapping area is configured by the base station and notified to the UE or is preconfigured in the UE; and reconfiguring the shared resource pool according to a resource occupation situation of the overlapping area. This solves the technical problem of a low utilization rate of radio resources caused by independent configurations of different resource pools in the related art.

## Description

### CROSS REFERENCES TO RELATED APPLICATIONS

This application claims priority to a Chinese patent application No. 201710687672.8 filed on August 11, 2017, disclosure of which is incorporated herein by reference in its entirety.

### TECHNICAL FIELD

The present invention relates to the field of vehicle to everything and, specifically, to a method and a device for configuring a radio resource pool.

### BACKGROUND

With the rapid development of economy and society, China's automobile ownership grows rapidly; however, frequent occurrence of road traffic accidents has become an important factor adversely affecting the sense of public safety in China in recent years and road traffic safety problem has become one of the basic issues affecting social harmony and improvement of people's livelihood. It is urgent for China to improve traffic safety in terms of technology, policy, education and so on, and one important part is to improve vehicle safety design.

Technologies for improving vehicle safety mainly include passive safety technologies and active safety technologies. The passive safety technologies are used to protect people and articles inside and outside a vehicle when an accident occurs. The active safety technologies are used to prevent and reduce vehicle accidents, preventing people from injuries. The active safety technologies are the focus and trend of modern vehicle safety technology development.

A communication-based collision warning system employs advanced radio communication technologies and a new generation of information processing technologies to implement real-time information interactions between vehicles and between vehicle and road side infrastructure, inform each other of the current status (including the position, speed, acceleration and traveling path of the vehicle) and the learned road environment information, cooperatively sense road hazard situations and provide various collision warning information in time and prevent road traffic accidents, thereby becoming a new way for countries to try to solve road traffic safety problems.

Two resource configuration modes may be employed for a PC5 link in LTE V2X in the related art: mode 3 and mode 4, where mode 3 is that a base station configures a PC5 radio resource, mode 4 is that a UE autonomously selects a PC5 radio resource, and resource pools of mode 3 and mode 4 are configured separately without an overlapping area. This results in resource wastes.

No effective solution has yet been proposed for the preceding problem in the related art.

This section is background information related to the present invention, but this background information is not necessarily the existing art.

### SUMMARY

Embodiments of the present invention provide a method and a device for configuring a radio resource pool to solve at least the technical problem of a low utilization rate of radio resources caused by independent configurations of different resource pools in the related art.

According to an embodiment of the present invention, a method for configuring a radio resource pool is provided. The method includes configuring a shared resource pool, where the shared resource pool includes a first resource pool and a second resource pool, the first resource pool is used by a base station to configure a PC5 radio resource for a user equipment (UE), the second resource pool is used by the UE to autonomously select a PC5 radio resource, the first resource pool completely or partially overlaps with the second resource pool, and an overlapping area is configured by the base station and notified to the UE or is preconfigured in the UE; and reconfiguring the shared resource pool according to a resource occupation situation of the overlapping area.

According to an embodiment of the present invention, the step of reconfiguring the shared resource pool according to the resource occupation situation of the overlapping area includes one of: reconfiguring the size of the overlapping area and notifying the UE of the reconfigured shared resource pool; maintaining the size of the overlapping area, updating a PC5 transmission parameter and notifying the UE of the updated PC5 transmission parameter; or maintaining the size of the overlapping area, and selecting, by the UE, a new PC5 transmission parameter.

According to an embodiment of the present invention, before the step of reconfiguring the shared resource pool according to the resource occupation situation of the overlapping area, the method further includes acquiring the resource occupation situation of the overlapping area and reporting the resource occupation situation to the base station.

According to an embodiment of the present invention, the method further includes that the base station indicates a UE that needs to report the resource occupation situation of the overlapping area.

According to an embodiment of the present invention, the method further includes that a UE that uses a PC5 resource configured by the base station and belonging to the overlapping area detects the resource occupation situation of the overlapping area, and a detection result is reported to the base station when the UE is in a connected state.

According to an embodiment of the present invention, control information sent through a PC5 interface by the UE that uses the PC5 resource configured by the base station and belonging to the overlapping area indicates at least one of a semi-persistent scheduling period or a resource allocation mode.

According to an embodiment of the present invention, the step of reconfiguring the size of the overlapping area includes scheduling a resource outside the overlapping area in the shared resource pool or a radio resource outside the shared resource pool and available to the PC5 interface to join the overlapping area.

According to an embodiment of the present invention, after the step of reconfiguring the shared resource pool according to the resource occupation situation of the overlapping area, the method further includes determining congestion relief in the overlapping area and determining, according to a current air interface resource situation, whether to reconfigure the shared resource pool or update the PC5 transmission parameter.

According to an embodiment of the present invention, another method for configuring a radio resource pool is provided. The method includes detecting a resource occupation situation of an overlapping area, where the overlapping area is an area where a first resource pool overlaps with a second resource pool, the first resource pool is used by a base station to configure a PC5 radio resource for a UE, the second resource pool is used by the UE to autonomously select a PC5 radio resource, the first resource pool completely or partially overlaps with the second resource pool, and the overlapping area is configured by the base station and notified to the UE or is preconfigured in the UE.

The method further includes reporting indication information about the resource occupation situation of the overlapping area to the base station according to configuration of the base station. According to an embodiment of the present invention, after the step of reporting the indication information about the resource occupation situation of the overlapping area to the base station according to the configuration of the base station, the method further includes one of: receiving information about a shared resource pool reconfigured by the base station, receiving an updated PC5 transmission parameter, or selecting a new PC5 transmission parameter.

According to another embodiment of the present invention, a device for configuring a radio resource pool is provided. The device is applied in a base station and includes a configuration module and a reconfiguration module. The configuration module is configured to configure a shared resource pool, where the shared resource pool includes a first resource pool and a second resource pool, the first resource pool is used by the base station to configure a PC5 radio resource for a UE, the second resource pool is used by the UE to autonomously select a PC5 radio resource, the first resource pool completely or partially overlaps with the second resource pool, and an overlapping area is configured by the base station and notified to the UE or is preconfigured in the UE. The reconfiguration module is configured to reconfigure the shared resource pool according to a resource occupation situation of the overlapping area.

According to an embodiment of the present invention, the reconfiguration module includes one of a first configuration unit or a second configuration unit. The first configuration unit is configured to reconfigure a size of the overlapping area and notify the UE of the reconfigured shared resource pool; the second configuration unit is configured to maintain the size of the overlapping area, update a PC5 transmission parameter and notify the UE of the updated PC5 transmission parameter.

According to another embodiment of the present invention, a device for configuring a radio resource pool is provided. The device is applied to a UE and includes a detection module and a sending module. The detection module is configured to detect a resource occupation situation of an overlapping area, where the overlapping area is an area where a first resource pool overlaps with a second resource pool, the first resource pool is used by a base station to configure a PC5 radio resource for the UE, the second resource pool is used by the UE to autonomously select a PC5 radio resource, the first resource pool completely or partially overlaps with the second resource pool, and the overlapping area is configured by the base station and notified to the UE or is preconfigured in the UE. The sending module is configured to report indication information about the resource occupation situation of the overlapping area to the base station according to configuration of the base station.

According to another embodiment of the present invention, a storage medium is further provided. The storage medium is configured to store program codes for performing the steps described below.

A shared resource pool is configured. The shared resource pool includes a first resource pool and a second resource pool, the first resource pool is used by a base station to configure a radio resource of a PC5 for a UE, the second resource pool is used by the UE to autonomously select a radio resource of the PC5, the first resource pool completely or partially overlaps with the second resource pool, and an overlapping area is configured by the base station and notified to the UE or is preconfigured in the UE.

The shared resource pool is reconfigured according to resource occupation situation of the overlapping area.

Through the present invention, the shared resource pool including the first resource pool and the second resource pool is configured, and the shared resource pool is reconfigured in real time according to the resource occupation situation of the overlapping area, so that the technical problem of a low utilization rate of radio resources caused by independent configuration of different resource pools in the related art is solved, thereby improving the resource utilization rate.

This section provides a summary of various embodiments and examples of the technologies described in the present invention, but this section is not the whole scope of the disclosed technologies or full disclosure of all features.

### BRIEF DESCRIPTION OF DRAWINGS

The drawings described herein are used to provide a further understanding of the present invention and form a part of the present application. The exemplary embodiments and descriptions thereof in the present invention are used to explain the present invention and do not cause improper limitation to the present invention. In the drawings:
FIG. 1 is a schematic diagram of vehicle to everything in related technology of the present invention;
FIG. 2 is a diagram of system architecture for sending V2X service through a PC5 interface in related technology of the present invention;
FIG. 3 is a flowchart of a method for configuring a radio resource pool according to an embodiment of the present invention;
FIG. 4 is a flowchart of another method for configuring a radio resource pool according to an embodiment of the present invention;
FIG. 5 is a structural diagram of a device for configuring a radio resource pool according to an embodiment of the present invention;
FIG. 6 is a structural diagram of another device for configuring a radio resource pool according to an embodiment of the present invention;
FIG. 7 is a schematic diagram of a shared resource pool according to an embodiment of the present invention;
FIG. 8 is a flowchart according to an embodiment of the present invention;
FIG. 9 is a method flowchart according to implementation one;
FIG. 10 is a method flowchart according to implementation two;
FIG. 11 is a method flowchart according to implementation three;
FIG. 12 is a method flowchart according to implementation four;
FIG. 13 is a method flowchart according to implementation five;
FIG. 14 is schematic diagram 1 of a shared resource pool according to implementation six;
FIG. 15 is schematic diagram 2 of a shared resource pool according to implementation six; and
FIG. 16 is a schematic diagram of a system for configuring a PC5 resource pool according to implementation seven.

### DETAILED DESCRIPTION

The present invention will be described hereinafter in detail with reference to the drawings and in conjunction with embodiments. It is to be noted that if not in collision, the embodiments and features therein in the present application can be combined with each other.

It is to be noted that the terms "first", "second" and the like in the description, claims and preceding drawings of the present invention are used to distinguish between similar objects and are not necessarily used to describe a particular order or sequence.

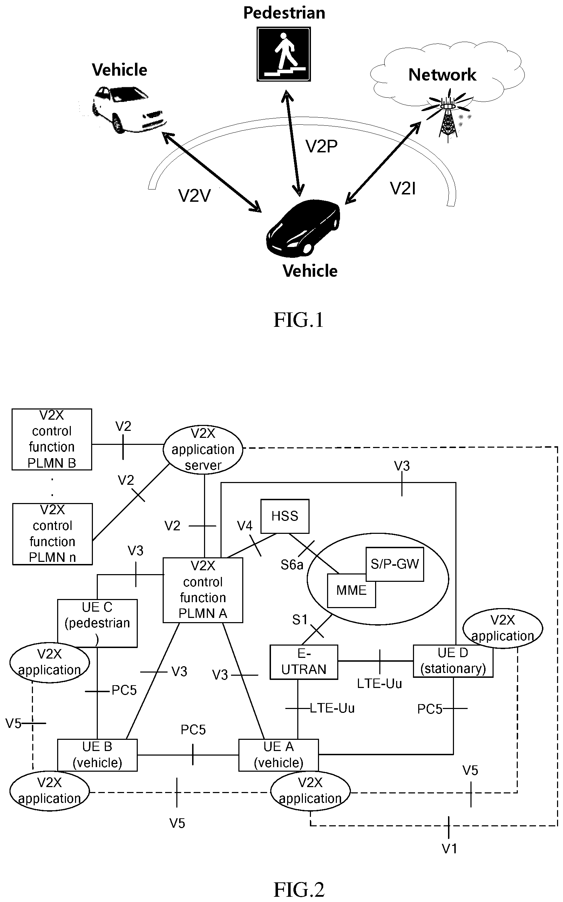

Vehicle to everything (V2X) refers to provision of vehicle information by sensors, vehicle-mounted terminals and electronic tags mounted on vehicles, implementation of vehicle-to-vehicle (V2V), vehicle-to-pedestrian (V2P) and vehicle-to-infrastructure (V2I) intercommunication by using various communication technologies, and effective use such as extraction or sharing of information on an information network platform. In this way, vehicles are managed and controlled effectively and are provided with comprehensive services. FIG. 1 is a schematic diagram of vehicle to everything in related technology of the present invention.

In recent years, with the development of new mobile communication technologies, the LTE technology starts to be used in the world to solve problems in the research on application based on V2X communication.

A road side unit (RSU) may receive vehicle request and ensure that a vehicle accesses the Internet, so the RSU has a function of gateway. The RSU also has functions of data operation, storage and forwarding.

There are two V2X implementation technologies in related technology: dedicated short range communication (DSRC) and LTE. The DSRC is based on IEEE802.11P standards and IEEE1609 standards, where the IEEE802.11P is responsible for physical layer and medium access control (MAC) technologies and IEEE1609 is responsible for upper specifications. The LTE-based V2X technology is in an initial discussion stage and no standards have been proposed yet.

In related technology, the LTE V2X technology currently discussed in 3GPP includes that the RSU may be implemented by a stationary UE or an eNB and V2V/V2I/V2P may be implemented through a PC5 interface or a Uu interface. The PC5 interface refers to a device-to-device (D2D) air interface and the Uu interface refers to an air interface from UE to eNB. System architecture for sending V2X service through the PC5 interface is shown in FIG. 2, and FIG. 2 is a diagram of system architecture for sending V2X service through the PC5 interface in related technology of the present invention.

In the LTE V2X topic being studied in the 3GPP, under a mode where UE autonomously selects resource (mode 4), the UE selects a needed PC5-interface sending resource in way of sensing, and an exceptional resource pool may be adopted in case of handover (HO), a radio link failure (RLF), a resource pool update and so on. A pedestrian (P) in the V2P generally has no PC5 reception capability, so selecting resource in way of sensing cannot be adopted.

V2X information is security-related and is generally not allowed to be discarded, and corresponding radio transmission parameters need to be selected for different congestion degrees if there occurs network congestion, so channel busy ratio (CBR) is used in the 3GPP to evaluate the congestion degree of a channel. The CBR is defined as the ratio of a sub-channel whose sub-channel energy exceeding a threshold value in a resource pool within a period of time (generally 100 ms), where the sub-channel energy is identified by sidelink-received signal strength indication (S-RSSI), the threshold value is determined in advance, and the UE measures and calculates the CBR according to measurement configuration of a network side. For a given CBR, the network side provides a mapping table on the basis of each V2X priority (using Proximity based Services (ProSe) Per-Packet Priority (PPPP)), where each table includes the CBR (which generally is a range) and a corresponding radio resource parameter and the UE selects the corresponding radio resource parameter according to the CBR.

For ease of description, a V-UE herein refers to a vehicle-UE and a P-UE herein refers to a pedestrian-UE.

### Embodiment one

The embodiment of the present application may be executed on network architecture shown in FIG. 2.

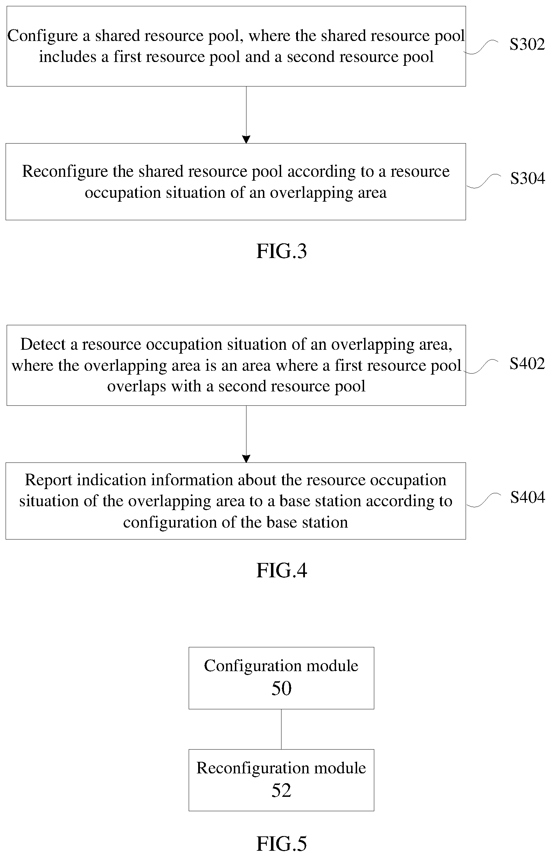

The embodiment provides a method for configuring a radio resource pool and the method is performed on the preceding network architecture. FIG. 3 is a flowchart of a method for configuring a radio resource pool according to an embodiment of the present invention. As shown in FIG. 3, the method includes the steps described below.

In step S302, a shared resource pool is configured. The shared resource pool includes a first resource pool and a second resource pool, the first resource pool is used by a base station to configure a PC5 radio resource for a user equipment (UE), the second resource pool is used by the UE to autonomously select a PC5 radio resource, the first resource pool completely or partially overlaps with the second resource pool, and an overlapping area is configured by the base station and notified to the UE or is preconfigured in the UE.

In S304, the shared resource pool is reconfigured according to a resource occupation situation of the overlapping area.

Through the preceding steps, the shared resource pool including the first resource pool and the second resource pool is configured, and the shared resource pool is reconfigured in real time according to the resource occupation situation of the overlapping area, so that the technical problem of a low utilization rate of radio resources caused by independent configurations of different resource pools in the related art is solved, thereby improving the resource utilization rate.

Optionally, the preceding steps may be, but is not necessarily, executed by the base station.

Resources in the overlapping area of the embodiment may be used as the PC5 resource configured by the base station for the UE or the PC5 resource autonomously selected by the UE.

Optionally, the step of reconfiguring the shared resource pool according to the resource occupation situation of the overlapping area includes one of:
reconfiguring a size of the overlapping area and notifying the UE of the reconfigured shared resource pool;
maintaining the size of the overlapping area, updating a PC5 transmission parameter and notifying the UE of the updated PC5 transmission parameter, where in the mode of scheduling by the base station, the PC5 parameter is updated by the base station and in the mode of autonomously selecting by the UE, the PC5 parameter is selected by the UE; or
maintaining the size of the overlapping area and selecting a new PC5 transmission parameter by the UE.

Optionally, before the step of reconfiguring the shared resource pool according to the resource occupation situation of the overlapping area, the method further includes acquiring the resource occupation situation of the overlapping area and reporting the resource occupation situation to the base station.

Optionally, the solution of the embodiment further includes that the base station indicates a UE that needs to report the resource occupation situation of the overlapping area.

Optionally, the solution of the embodiment further includes that a UE that uses a PC5 resource configured by the base station and belonging to the overlapping area detects the resource occupation situation of the overlapping area, and a detection result is reported to the base station when the UE is in a connected state. The base station may specify the UE that needs to report the detection result.

Optionally, control information sent through a PC5 interface by the UE that uses the PC5 resource configured by the base station and belonging to the overlapping area indicates at least one of a semi-persistent scheduling period or a resource allocation mode. The UE in the mode of scheduling by the base station indicates the SPS period in SCI, and the UE in the mode of autonomously selecting resource excludes a corresponding resource according to the indication information. A resource selection mode for the UE may be indicated in the SCI: scheduling by the base station or autonomously selecting by the UE.

Optionally, the step of reconfiguring the size of the overlapping area includes scheduling a resource outside the overlapping area in the shared resource pool or a radio resource outside the shared resource pool and available to the PC5 interface to join the overlapping area.

Optionally, after the step of reconfiguring the shared resource pool according to the resource occupation situation of the overlapping area, the method further includes the steps described below.

In step S11, congestion relief in the overlapping area is determined.

In step S12, whether to reconfigure the shared resource pool or update the PC5 transmission parameter is determined according to a current air interface resource situation.

The embodiment provides the method for configuring the radio resource pool and the method is executed on the preceding network architecture. FIG. 4 is a flowchart of another method for configuring a radio resource pool according to an embodiment of the present invention. As shown in FIG. 4, the method includes the steps described below.

In step S402, a resource occupation situation of an overlapping area is detected. The overlapping area is an area where a first resource pool overlaps with a second resource pool, the first resource pool is used by a base station to configure a PC5 radio resource for a UE, the second resource pool is used by the UE to autonomously select a PC5 radio resource, the first resource pool completely or partially overlaps with the second resource pool, and the overlapping area is configured by the base station and notified to the UE or is preconfigured in the UE.

In step S404, indication information about the resource occupation situation of the overlapping area is reported to the base station according to configuration of the base station.

Optionally, the preceding steps may be, but is not necessarily, executed by a terminal.

Optionally, after the step of reporting the indication information about the resource occupation situation of the overlapping area to the base station according to the configuration of the base station, the method further includes one of: receiving information about a shared resource pool reconfigured by the base station, receiving an updated PC5 transmission parameter, or selecting a new PC5 transmission parameter.

From the description of the embodiments described above, it will be apparent to those skilled in the art that the methods in the embodiments described above may be implemented by software plus a necessary general-purpose hardware platform, or may of course be implemented by hardware. However, in many cases, the former is preferred implementation. Based on this understanding, the solutions provided by the present invention substantially, or the part contributing to the related art, may be embodied in the form of a software product. The computer software product is stored in a storage medium (such as a ROM/a RAM, a magnetic disk or an optical disk) and includes several instructions for enabling terminal equipment (which may be a mobile phone, a computer, a server, a network equipment or the like) to perform the methods according to respective embodiments of the present invention.

### Embodiment two

An embodiment further provides a device for configuring a radio resource pool to implement the preceding embodiments and preferred implementations. What has been described will not be repeated. As used below, the term "module" may be software, hardware or a combination thereof capable of implementing predetermined functions. The device in the embodiment below is preferably implemented by software, but implementation by hardware or by a combination of software and hardware is also possible and conceived.

FIG. 5 is a structural diagram of a device for configuring a radio resource pool according to an embodiment of the present invention. As shown in FIG. 5, the device is applied to a base station and includes a configuration module 50 and a reconfiguration module 52.

The configuration module 50 is configured to configure a shared resource pool. The shared resource pool includes a first resource pool and a second resource pool, the first resource pool is used by the base station to configure a PC5 radio resource for a UE, the second resource pool is used by the UE to autonomously select a PC5 radio resource, the first resource pool completely or partially overlaps with the second resource pool, and an overlapping area is configured by the base station and notified to the UE or is preconfigured in the UE.

The reconfiguration module 52 is configured to reconfigure the shared resource pool according to a resource occupation situation of the overlapping area.

Optionally, the reconfiguration module includes one of: a first configuration unit or a second configuration unit. The first configuration unit is configured to reconfigure a size of the overlapping area and notify the UE of a reconfigured shared resource pool; the second configuration unit is configured to maintain the size of the overlapping area, update a PC5 transmission parameter and notify the UE of the updated PC5 transmission parameter.

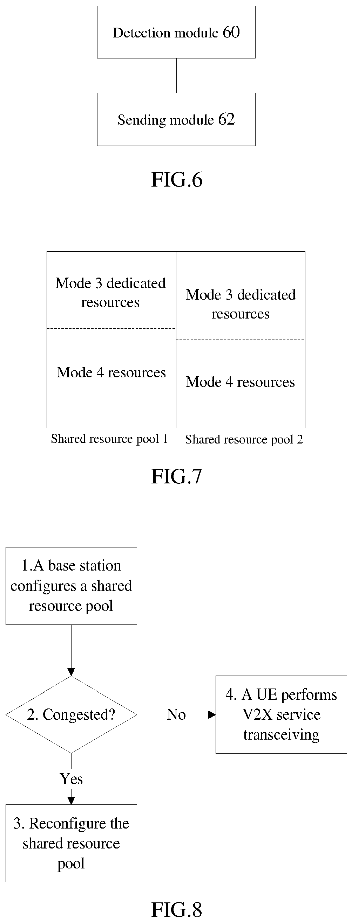

FIG. 6 is a structural diagram of another device for configuring a radio resource pool according to an embodiment of the present invention. As shown in FIG. 6, the device is applied to a UE and includes a detection module 60 and a sending module 62.

The detection module 60 is configured to detect a resource occupation situation of an overlapping area. The overlapping area is an area where a first resource pool overlaps with a second resource pool, the first resource pool is used by a base station to configure a PC5 radio resource for the UE, the second resource pool is used by the UE to autonomously select a PC5 radio resource, the first resource pool completely or partially overlaps with the second resource pool, and the overlapping area is configured by the base station and notified to the UE or is preconfigured in the UE.

The sending module 62 is configured to report indication information about the resource occupation situation of the overlapping area to the base station according to configuration of the base station.

It is to be noted that the various modules described above may be implemented by software or hardware. Implementation by hardware may, but may not necessarily, be performed in the following manners: the various modules described above are located in a same processor, or the various modules described above, in any combination form, are located in different processors.

### Embodiment three

As regards the related art, the applicant has found the problem described blow. Resource pools of two resource configuration modes are independent from each other, and different configuration modes generally have different load levels. This may result in different resource-pool utilization rates in different configuration modes. For example, a resource pool of a certain mode is under-utilized, while a resource pool of another mode is congested. As regards this scenario, it is necessary to solve the problem how to configure resource pools of the different modes.

Mode 3 dedicated resources are configured in a shared resource pool. If a mode 3 dedicated resource pool is congested, then the base station selects a PC5 resource needed by mode 3 from mode 4 resources in the shared resource pool and notifies the UE through a broadcast signaling. If mode 4 resources are congested in the shared resource pool, then a mode 4 UE sends congestion indication information to the base station, and the base station selects, according to the indication information, part of the mode 3 dedicated resources for mode 4 UE resource selection and performs a notification through a broadcast signaling.

The device of the present invention includes a terminal device and an access network device. The disclosed terminal device includes at least one of on board unit (OBU), RSU, the UE, V-UE, P-UE, wearables, UE-to-network relay or IOT/MTC terminal (unless otherwise specifically noted, the UE in the present invention represents one or more of the preceding terminal devices). The terminal device determines a needed PC5 resource according to indication of the base station, measures a PC5 resource pool and sends congestion indication information to the base station.

The access network device includes at least the base station. The base station is mainly responsible for indicating a PC5-interface shared resource pool and the mode3 dedicated resource pool to the terminal device and receiving the congestion indication information of a PC5 resource pool sent by the terminal device.

The present invention further describes a method for configuring a resource by using the preceding device. The method includes the steps described below.

The shared resource pool refers to a resource pool shared by mode 3 and mode 4. The mode 3 dedicated resources are included in the shared resource pool. FIG. 7 is a schematic diagram of a shared resource pool according to an embodiment of the present invention. The mode 3 dedicated resources are normally used for only mode 3 transmission, and resources in the shared resource pool other than the mode 3 dedicated resources are used for mode 4 transmission. If the mode 3 dedicated resources are congested, then the base station may schedule part of mode 4 resources for the mode 3 transmission and send a broadcast signaling for notification. If the mode 4 resources are congested, then the UE that detects congestion reports the congestion to the base station, and the base station may configure part of the mode 3 dedicated resources for the mode 4 transmission and send a broadcast signaling for notification.

Unless otherwise specifically noted, the resources in the shared resource pool other than the mode 3 dedicated resources are referred to herein as the mode 4 resources.

The shared resource pool includes time domain resource information and frequency domain resource information. Time domain resources are in units of sub-frames, and frequency domain resources are in units of resource blocks (RBs) or sub-channels, where each sub-channel is multiple continuous RBs. The shared resource pool may be used for a physical sidelink control channel (PSCCH) and/or a physical sidelink shared channel (PSSCH).

The eNB indicates a PC5 shared resource pool configuration parameter through a system message SIB or a dedicated radio resource control (RRC) signaling.

PC5 communication includes intra-frequency or inter-frequency. The intra-frequency is that Uu communication and PC5 communication share the same frequency, and the inter-frequency is that the PC5 communication adopts a dedicated frequency, for example, a V2X frequency at 5.9 GHz.

The PC5 refers to an interface between UEs and may also be represented by other names (for example, sidelink). The PC5 interface may employ a radio transmission technology, such as the spectrum-licensed Prose technology, the wireless local area network (WLAN)/Wi-Fi (for example, 802.11 series), Bluetooth, or infrared.

FIG. 8 is a flowchart according to an embodiment of the present invention. The process includes the steps described below.

In step 1, a base station configures a shared resource pool.

The configuration includes the shared resource pool, mode 3 dedicated resources, UE measurement configuration and UE reporting configuration. The mode 3 dedicated resources are part of resources in the shared resource pool and normally used for only mode 3 transmission; if there are resource congestion or overload, then the base station may adjust the size of the mode 3 dedicated resources according to a congestion degree; and resources in the shared resource pool other than the mode 3 dedicated resources are referred to herein as mode 4 resources. The UE measurement configuration refers to a configuration parameter used for the UE to measure the congestion degree of the shared resource pool, for example, CBR configuration. The UE reporting configuration refers to a UE that needs to report, and a threshold value triggering the UE reporting or a reporting period.

The configuration is sent via a system broadcast message, and the system broadcast message includes an existing Prose system message or a newly added V2X dedicated system message.

In step 2, it is determined whether the shared resource pool is congested; if the shared resource pool is congested, the process goes to step 3, and otherwise, if the shared resource pool is not congested, the process goes to step 4.

The determination is made according to a measurement result by the UE that uses shared resources. If the CBR measured by the UE exceeds the predetermined threshold, then the UE determines that there is congestion, and the UE reports congestion indication information to the base station, where the congestion includes mode 3 congestion and/or mode 4 congestion. The mode 3 resource congestion is measured and determined by the UE that uses the mode 3 resources and the mode 4 resource congestion is measured and determined by the UE that uses the mode 4 resources. The reporting information is carried over RRC signaling.

In step 3, the base station reconfigures the shared resource pool.

The base station receives the congestion indication information and reconfigures the shared resource pool according to the congestion degree. If the mode 3 resources are congested and the mode 4 resources are not congested, then the base station selects a resource for mode 3 from the mode 4 resources and sends a broadcast signaling to notify the UE using the shared resource pool, and thus, the UE using the mode 4 resources senses, selects and reserves a needed PC5 resource other than the mode 3 resources. If the mode 4 resources are congested and the mode 3 resources are not congested, then the base station selects part of the mode 3 resources for mode 4 transmission and sends a broadcast signaling to notify the UE using the shared resource pool, and thus, the UE using the mode 4 resources senses, selects and reserves a needed PC5 resource within the mode 3 resources (part of the resources indicated by the base station). If both mode 3 and mode 4 resources are congested, then the base station may enlarge the shared resource pool, designate mode 3 dedicated resources in the new shared resource pool, that is, the base station increases the sizes of mode3 and mode 4 resources, and sends a broadcast signaling to notify the UE using the shared resource pool, and the increased size of the resource pool is determined by the base station according to the congestion degree and available PC5 resources.

In step 4, the UE performs V2X information transceiving according to the shared resource pool configuration.

If the shared resource pool is not congested, then the UE performs the V2X information transceiving according to the configuration of the shared resource pool. That is, the UE adopting mode 3 performs the V2X information transceiving on the mode 3 dedicated resources according to the base station indication, and the UE adopting mode 4 autonomously selects a resource to perform the V2X information transceiving from the mode 4 resources.

The method of the present invention may be applied to vehicle-to-everything (V2X) service, wearables service, machine type communication (MTC), public safety (PS) communication, Internet of things (IOT), a UE-to-network relay and the like.

Implementation one: a shared resource pool is not congested.

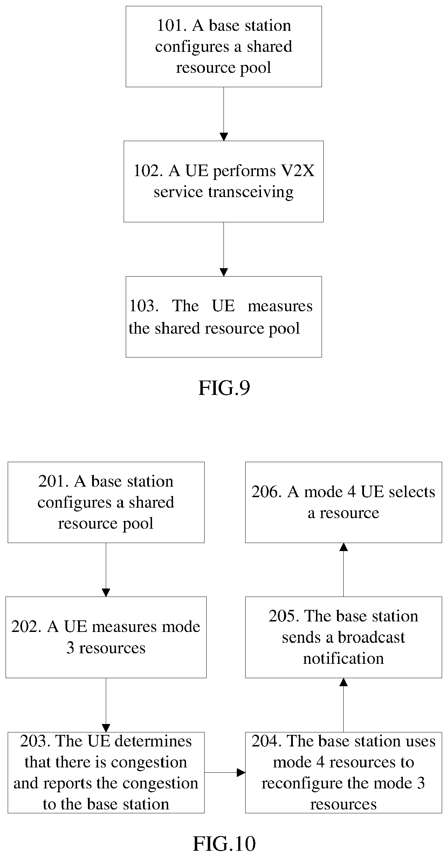

The implementation provides a method for configuring a PC5 radio resource. FIG. 9 is a method flowchart according to implementation one, and the method includes the steps described below.

In step 101, a base station configures a shared resource pool.

This step is the same as the preceding step 1 and will not be repeated here.

In step 102, a UE adopts the shared resource pool to perform V2X information transceiving.

The UE performs V2X communication according to configuration of the shared resource pool, that is, mode 3 transmission and mode 4 transmission are performed on mode 3 resources and mode 4 resources respectively.

In step 103, the UE measures the shared resource pool.

The UE measures the shared resource pool according to configuration information of the base station and determines whether there is congestion.

Implementation two: mode 3 resources are congested.

This implementation provides a method for configuring a PC5 radio resource. FIG. 10 is a method flowchart according to implementation two, and the method includes the steps described below.

In step 201, a base station configures a shared resource pool.

This step is similar to the preceding step 101 and will not be repeated here.

In step 202, the UE measures mode 3 resources.

The UE measures the mode 3 resources according to configuration information of the base station, for example, performs a CBR measurement. The UE is a UE that adopts a mode 3 transmission mode.

In step 203, the UE determines that there is congestion and reports congestion indication information to the base station.

The UE determines whether there is the congestion according to the configuration information of the base station, for example, if a CBR measurement result exceeds a predefined threshold value, then it can be determined that the mode 3 resources are congested. The UE reports the congestion indication information to the base station according to the configuration information of the base station.

In step 204, the base station schedules resources for mode 3 transmission from mode 4 resources.

The base station schedules the resources for the mode 3 transmission from the mode 4 resources according to the received congestion indication information.

In step 205, the base station sends a broadcast signaling to indicate the resources for the mode 3 transmission.

The base station sends the broadcast signaling to indicate the resources for scheduling the mode 3 transmission in the mode 4 resources.

In step 206, a UE adopting mode 4 autonomously selects a PC5 resource other than the mode 3 resources.

The UE listens for the broadcast signaling, senses and selects, according to indication information of the broadcast signaling, a resource for mode 4 transmission other than the resources indicated by the broadcast signaling, that is, not selects the resources already used for the mode 3 transmission.

Implementation three: mode 4 resources are congested.

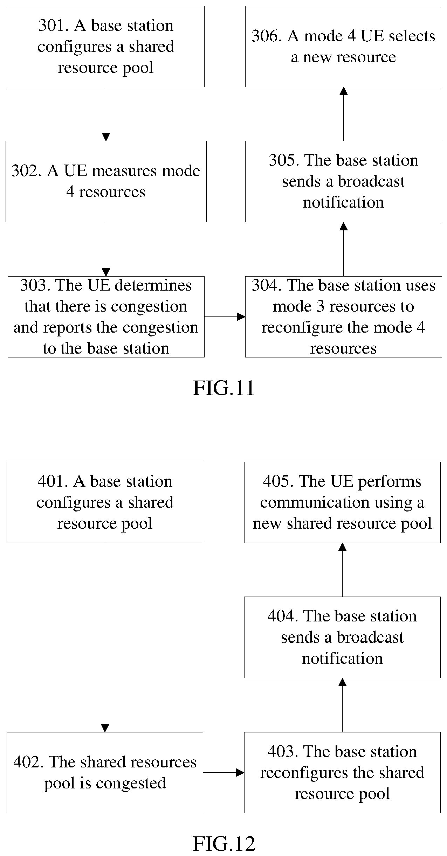

This implementation provides a method for configuring a PC5 radio resource. FIG. 11 is a method flowchart according to implementation three, and the method includes the steps described below.

In step 301, a base station configures a shared resource pool.

In step 302, the UE measures mode 4 resources.

The UE measures the mode 4 resources according to configuration information of the base station, for example, CBR.

The UE is a UE that adopts a mode 4 transmission mode.

In step 303, the UE determines that the mode 4 resources are congested and reports congestion indication information to the base station.

The UE determines that the mode 4 resource are congested according to a prescribed rule, and reports the congestion indication information to the base station through an RRC signaling.

In step 304, the base station selects part of mode 3 resources for mode 4.

The base station determines to select part of mode 3 dedicated resources for mode 4 according to the received congestion indication information.

In step 305, the base station sends a broadcast signaling to indicate the resources for the mode 4 transmission.

The base station sends the broadcast signaling to notify the UE of newly added mode 4 resources.

In step 306, the UE adopting mode 4 autonomously selects a PC5 resource from the new mode 4 resources.

The UE autonomously selects the needed PC5 resource from the newly added mode 4 resources.

Implementation four: both mode 3 and mode 4 are congested.

This implementation provides a method for configuring a PC5 radio resource. FIG. 12 is a method flowchart according to implementation four, and the method includes the steps described below.

In step 401, a base station configures a shared resource pool.

In step 402, the shared resources pool is congested.

The shared resources pool includes mode 3 resources and mode 4 resources. Congestion is measured and determined by a UE in a corresponding resource pool, and congestion indication information is sent to the base station.

In step 403, the base station reconfigures the shared resource pool.

The base station determines to enlarge the shared resource pool according to the received congestion indication information and available PC5 resources.

In step 404, the base station sends a broadcast signaling for notifying the reconfigured shared resource pool.

The base station sends the broadcast signaling to indicate a newly added resource pool including mode 3 and mode 4 resources.

In step 405, the UE performs V2X service transceiving in the new shared resource pool.

Implementation five: congestion relief

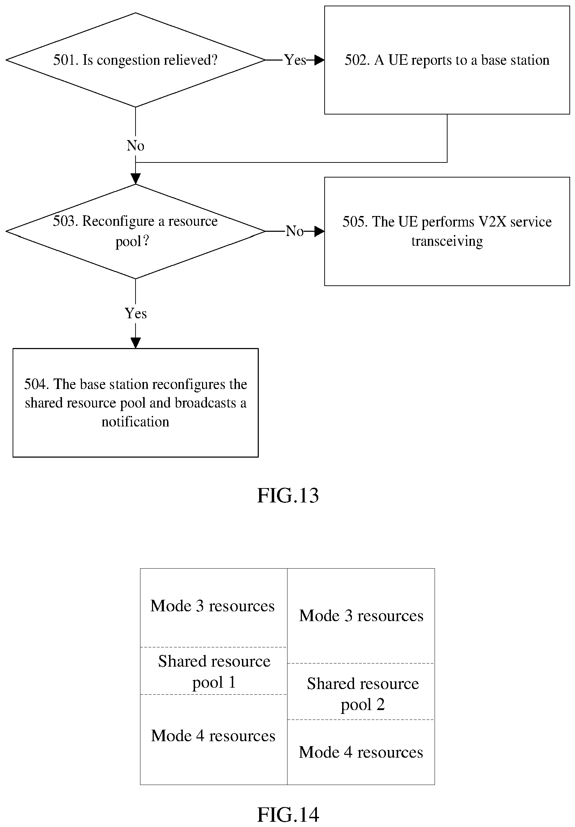

This implementation provides a method for configuring a PC5 radio resource. FIG. 13 is a method flowchart according to implementation five, and the method includes the steps described below.

In step 501, a UE determines whether congestion is relieved; if the congestion is relieved, the process goes to step 502, and otherwise, the process turns to step 503.

The UE performs a measurement according to configuration information of a base station and determines whether congestion is relieved according to a measurement result. The congestion includes one or two of the following: mode 3 resource congestion and mode 4 resource congestion.

In step 502, the UE reports congestion relief information to the base station.

The UE reports the congestion relief information to the base station according to the configuration information of the base station.

In step 503, the base station determines whether to reconfigure the shared resource pool; if the base station determines to reconfigure the shared resource pool, the process goes to step 504, and otherwise, the process goes to step 505.

The base station determines whether to reconfigure the shared resource pool according to the received congestion relief indication information and an air interface resource situation. The reconfiguration includes one of: increasing or decreasing the mode 3 resources, increasing or decreasing the mode 4 resources, or increasing or decreasing resources in the shared resource pool.

In step 504, the base station reconfigures the shared resource pool and sends a broadcast information for notification.

The base station reconfigures the shared resource pool and sends the broadcast information to notify the UE.

In step 505, the UE adopts a current shared resource pool to perform V2X information transceiving.

Implementation six: a part of the shared resource pool is adopted.

FIG. 14 is schematic diagram 1 of a shared resource pool according to implementation six. Shared resource pools 1 and 2 include resources shared by mode 3 and mode 4, that is, both a mode 3 UE and a mode 4 UE can use the resources in the shared resource pools. Mode 4 resources are autonomously selected, and mode 3 resources are scheduled by a base station. Since a mode 4 UE does not know scheduling information of the base station and the base station also does not know information about mode 4 resource selection, there may be a resource collision. To reduce the collision and guarantee the reliability of mode 3 transmission, the mode 3 UE needs to sense and measure the shared resource pools and reports a measurement result to the base station. Optionally, if the result indicates that the shared resource pools have a high congestion degree, then the base station may schedule mode 3 resources preferentially; if the shared resource pools have a low congestion degree, the base station may select and schedule the resources needed by the mode 3 transmission from the shared resource pools. If the base station schedules resources for mode 3 from the shared resource pools, then the base station sends a broadcast information for notification, the UE adopting the mode 3 transmission indicates mode 3 reserved resource information in corresponding sidelink control information (SCI), and the UE adopting mode 4 determines the mode 3 resources according to the broadcast information or sensed SCI information and then autonomously selects other resources in the shared resource pools.

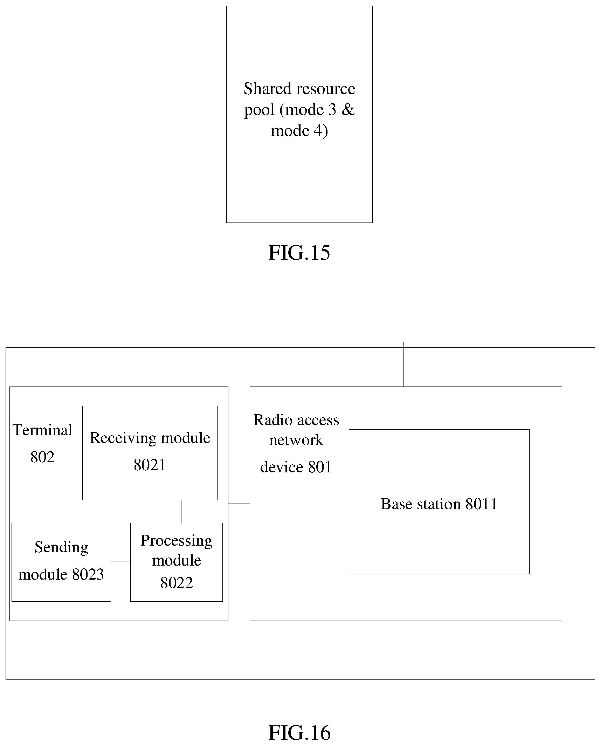

A shared resource pool may be completely shared, that is, mode 3 and mode 4 share all PC5 resources. FIG. 15 is schematic diagram 2 of a shared resource pool according to implementation six.

### Implementation seven: system structure implementation

This implementation discloses a system for configuring a PC5 resource pool. FIG. 16 is a schematic diagram of a system for configuring a PC5 resource pool according to implementation seven. The system includes a radio access network device 801 and a terminal 802. The radio access network device 801 includes a base station 8011, and the terminal 802 includes a terminal receiving module 8021, a processing module 8022 and a sending module 8023. The terminal receiving module 8021 is configured to receive configuration information sent by the base station module 8011, the processing module 8022 of the terminal 802 is configured to determine whether PC5 radio resources are congested, and the sending module 8023 of the terminal 802 is configured to send congestion indication information to the base station and send V2X service over PC5 by using a configured resource. The base station module 8011 is configured to send configuration information to the terminal 802, receive the congestion indication information reported by the UE, and configure and reconfigure a shared resource pool.

Through the present invention, the base station configures or reconfigures the shared resource pool, and the UE measures the shared resource pool and reports the congestion indication information, so that mode 3 resources and mode 4 resources are shared, and the utilization rate of PC5 resources is improved.

### Embodiment four

An embodiment of the present invention further provides a storage medium. Optionally, in the embodiment, the preceding storage medium may be configured to store program codes for performing the steps described below.

In step S1, a shared resource pool is configured. The shared resource pool includes a first resource pool and a second resource pool, the first resource pool is used by a base station to configure a PC5 radio resource for a UE, the second resource pool is used by the UE to autonomously select a PC5 radio resource, the first resource pool completely or partially overlaps with the second resource pool, and an overlapping area is configured by the base station and notified to the UE or is preconfigured in the UE.

In S2, the shared resource pool is reconfigured according to a resource occupation situation of the overlapping area.

Optionally, in the embodiment, the preceding storage medium may include, but is not limited to, a USB flash disk, a read-only memory (ROM), a random access memory (RAM), a mobile hard disk, a magnetic disk, an optical disk or any other medium capable of storing program codes.

Optionally, in an embodiment, a processor performs, according to the program codes stored in the storage medium, the step of configuring the shared resource pool. The shared resource pool includes the first resource pool and the second resource pool, the first resource pool is used by the base station to configure a PC5 radio resource for the UE, the second resource pool is used by the UE to autonomously select a PC5 radio resource, the first resource pool completely or partially overlaps with the second resource pool, and an overlapping area is configured by the base station and notified to the UE or is preconfigured in the UE.

Optionally, in an embodiment, the processor performs, according to the program codes stored in the storage medium, the step of reconfiguring the shared resource pool according to the resource occupation situation of the overlapping area.

Optionally, for specific examples in the embodiment, reference may be made to the examples described in the preceding embodiments and optional implementations, and repetition will not be made in the embodiment.

Apparently, it should be understood by those skilled in the art that each of the modules or steps of the present invention described above may be implemented by a general-purpose computing device, the modules or steps may be concentrated on a single computing device or distributed on a network composed of multiple computing devices and alternatively, the modules or steps may be implemented by program codes executable by the computing device, so that the modules or steps may be stored in a storage device and executed by the computing device. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention, and for those skilled in the art, the present invention may have various modifications and variations. Any modifications, equivalent substitutions, improvements and the like made within the spirit and principle of the present invention fall within the scope of the present invention.

### INDUSTRIAL APPLICABILITY

Embodiments of the present invention provide a method and a device for configuring a radio resource pool. The method includes configuring a shared resource pool, where the shared resource pool includes a first resource pool and a second resource pool, the first resource pool is used by a base station to configure a PC5 radio resource for a user equipment (UE), the second resource pool is used by the UE to autonomously select a PC5 radio resource, the first resource pool completely or partially overlaps with the second resource pool, and an overlapping area is configured by the base station and notified to the UE or is preconfigured in the UE; and reconfiguring the shared resource pool according to a resource occupation situation of the overlapping area. This solves the technical problem of a low utilization rate of radio resources caused by independent configurations of different resource pools in the related art, thereby improving the resource utilization rate.

## Claims

1. A method for configuring a radio resource pool, comprising:
configuring a shared resource pool, wherein the shared resource pool comprises a first resource pool and a second resource pool, the first resource pool is used by a base station to configure a PC5 radio resource for a user equipment, UE, the second resource pool is used by the UE to autonomously select a PC5 radio resource, the first resource pool completely or partially overlaps with the second resource pool, and an overlapping area is configured by the base station and notified to the UE or is preconfigured in the UE; and
reconfiguring the shared resource pool according to a resource occupation situation of the overlapping area.

2. The method of claim 1, wherein the reconfiguring the shared resource pool according to the resource occupation situation of the overlapping area comprises one of:
reconfiguring a size of the overlapping area and notifying the UE of the reconfigured shared resource pool;
maintaining the size of the overlapping area, updating a PC5 transmission parameter and notifying the UE of the updated PC5 transmission parameter; or
maintaining the size of the overlapping area, and selecting, by the UE, a new PC5 transmission parameter.

3. The method of claim 1, wherein before the reconfiguring the shared resource pool according to the resource occupation situation of the overlapping area, the method further comprises:
acquiring the resource occupation situation of the overlapping area and reporting the resource occupation situation to the base station.

4. The method of claim 3, further comprising:
indicating, by the base station, a UE that needs to report the resource occupation situation of the overlapping area.

5. The method of claim 1, further comprising:
detecting, by a UE that uses a PC5 resource configured by the base station and belonging to the overlapping area, the resource occupation situation of the overlapping area, and reporting a detection result to the base station when the UE is in a connected state.

6. The method of claim 1, wherein control information sent through a PC5 interface by a UE that uses a PC5 resource configured by the base station and belonging to the overlapping area indicates at least one of a semi-persistent scheduling period or a resource allocation mode.

7. The method of claim 2, wherein the reconfiguring the size of the overlapping area comprises:
scheduling a resource outside the overlapping area in the shared resource pool or a radio resource outside the shared resource pool and available to a PC5 interface to join the overlapping area.

8. The method of claim 1, wherein after the reconfiguring the shared resource pool according to the resource occupation situation of the overlapping area, the method further comprises:
determining congestion relief in the overlapping area; and
determining, according to a current air interface resource situation, whether to reconfigure the shared resource pool or update a PC5 transmission parameter.

9. A method for configuring a radio resource pool, comprising:
detecting a resource occupation situation of an overlapping area, wherein the overlapping area is an area where a first resource pool overlaps with a second resource pool, the first resource pool is used by a base station to configure a PC5 radio resource for a user equipment, UE, the second resource pool is used by the UE to autonomously select a PC5 radio resource, the first resource pool completely or partially overlaps with the second resource pool, and the overlapping area is configured by the base station and notified to the UE or is preconfigured in the UE; and
reporting indication information about the resource occupation situation of the overlapping area to the base station according to configuration of the base station.

10. The method of claim 9, wherein after the reporting the indication information about the resource occupation situation of the overlapping area to the base station according to the configuration of the base station, the method further comprises one of:
receiving information about a shared resource pool reconfigured by the base station;
receiving an updated PC5 transmission parameter; or
selecting a new PC5 transmission parameter.

11. A device for configuring a radio resource pool, applied to a base station, comprising:
a configuration module, which is configured to configure a shared resource pool, wherein the shared resource pool comprises a first resource pool and a second resource pool, the first resource pool is used by a base station to configure a PC5 radio resource for a user equipment, UE, the second resource pool is used by the UE to autonomously select a PC5 radio resource, the first resource pool completely or partially overlaps with the second resource pool, and an overlapping area is configured by the base station and notified to the UE or is preconfigured in the UE; and
a reconfiguration module, which is configured to reconfigure the shared resource pool according to a resource occupation situation of the overlapping area.

12. The device of claim 11, wherein the reconfiguration module comprises one of:
a first configuration unit, which is configured to reconfigure a size of the overlapping area and notify the UE of the reconfigured shared resource pool; or
a second configuration unit, which is configured to maintain the size of the overlapping area, update a PC5 transmission parameter and notify the UE of the updated PC5 transmission parameter.

13. A device for configuring a radio resource pool, applied to a user equipment, UE, comprising:
a detection module, which is configured to detect a resource occupation situation of an overlapping area, wherein the overlapping area is an area where a first resource pool overlaps with a second resource pool, the first resource pool is used by a base station to configure a PC5 radio resource for the UE, the second resource pool is used by the UE to autonomously select a PC5 radio resource, the first resource pool completely or partially overlaps with the second resource pool, and the overlapping area is configured by the base station and notified to the UE or is preconfigured in the UE; and
a sending module, which is configured to report indication information about the resource occupation situation of the overlapping area to the base station according to configuration of the base station.

14. A storage medium, which comprises a program stored thereon, wherein the program, when being executed, performs the method of any one of claims 1 to 10.

15. A processor, which is configured to execute a program, wherein the processor, when executing the program, performs the method of any one of claims 1 to 10.
